# EUROPEAN PATENT APPLICATION

(11) **EP 4 838 920 A1**
(43) Date of publication of application: **11.11.2026**
(21) Application number: 25305642.8
(22) Date of filing: 06.05.2025
(51) Int. Cl.: H04W 12/02, H04W 4/029, H04W 4/38, H04W 8/16

(54) **LOCATION SENSING RESTRICTION METHOD, APPARATUS, SYSTEM AND CORRESPONDING COMPUTER PROGRAM**

(71) Applicant: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: GRESSET, Nicolas, 35708 RENNES CEDEX 7 (FR); BECHIHI, Adel, 35708 RENNES CÉDEX 7 (FR); SIBEL, Jean-Christophe, 35708 RENNES CEDEX 7 (FR)
(74) Representative: Plasseraud IP

(57) **Abstract**

The invention relates to methods, devices and systems in which a privacy preservation device (PPD) connected to a communications network with sensing services, implements the method comprising:
- obtaining (S01), at least one piece of data representing a value (vPPP) of at least one privacy preservation parameter (PPP) corresponding to at least one applicative service and associated to a user.
- obtaining (S02), from at least one service provider (SP) operating with communications network for implementing said at least one applicative service, at least one piece of data representing a value (vASR) of the at least one service, the at least one applicative service being at least partly executed in the communications network,
- with said at least one piece of data representing a value (vPPP) of at least one privacy preservation parameter (PPP) and said at least one piece of data representing a value (vASR) of at least one applicative service parameter (ASR), determining (S03) at least one sensing accuracy (SA) parameter value (SAPV) for at least one corresponding sensing device (SD) of the communications network.

## Description

### 1. Domain of the Disclosure

The disclosure relates to communication infrastructure and services. More specifically the disclosure relates to a technique for preserving users privacy in a communication infrastructure, and more precisely a communication infrastructure which implements "sensing-as-a-service".

### 2. Prior art

The 6G communication standards introduces a transformative concept known as "sensing-as-a-service". This paradigm leverages advanced communication infrastructures and new devices to provide real-time sensing capabilities, allowing various stakeholders to access and utilize sensing data efficiently. The following outlines how the communication infrastructure is to be utilized, the types of devices involved, and the eventually parties who benefit from this innovative service.

The backbone of sensing-as-a-service in 5Ga or 6G is the integration of sensing and communication functionalities into a unified system, known as Integrated Sensing and Communications (ISAC). ISAC a capability to the 5Ga/6G vision, combining communication functions with sensing, positioning, and tracking. ISAC aims to multiplex time-space-frequency resources and utilize communications signals to sense various information about the physical world, such as building layouts, target locations, and personnel activities. The architecture of an ISAC framework for 6G networks typically consists of three modules: Static Environment Reconstruction (SER), which obtains layout and point cloud information of static buildings and objects; Dynamic Target Sensing (DTS) which detects, estimates, tracks, images, and recognizes dynamic targets in real-time; and Object Material Recognition that enables techniques to identify the materials of objects based on their electromagnetic properties. An example architecture for an ISAC system in 6G includes Base Stations (BS), among which Hybrid Unit (HU) are responsible for transmitting downlink communications signals, receiving uplink communications signals, and transmitting downlink sensing signals; radar Unit (RU) are responsible for receiving the sensing echo signals. Technologies enabling ISAC are massive Multiple-Input Multiple-Output (MIMO) systems for precise beamforming; Millimeter-Wave and Terahertz bands for high-speed communication and high-resolution sensing; Edge Computing for reduced latency and enhanced real-time sensing capabilities and Reconfigurable Intelligent Surfaces (RIS) for dynamically manipulating electromagnetic waves].

This architecture allows the 6G network to not only transmit data but also perceive and interpret the surrounding environment, enabling new services and enhancing existing ones such as XR, digital twinning, gesture recognition, and environment reconstruction.

This integration allows mobile networks to not only transmit data but also sense environmental conditions through existing communication infrastructure. The base stations (BS) and roadside units (RSU) are designed to actively sensing their surroundings while simultaneously communicating with users. Hence, ISAC system is to possibly achieve integration gain and coordination gain, which has been officially approved as one of the six key usage scenarios of 6G by the international telecommunications union (ITU).

Basically, in such an infrastructure, the Data Acquisition Process can be split into main phases:
- A sensing process, which notably involves the BS or RSU (but also users' equipment (UE) at some points) illuminating targets and capturing observations (while or not transferring data). This is facilitated through advanced waveforms designed (thanks to multiple antennas and design of these antennas) for optimal performance in both sensing and communication tasks.
- A Data Transmission process, after data is collected, the BS transmits the sensed data to core network and/or end-users, allowing for near real-time data sharing, enabling applications such as object detection, environmental monitoring, and smart city management.
- A Cloud Integration, in which the collected data is processed and stored in cloud platforms, which serve as centralized hubs for managing sensing tasks and facilitating access for various users.

Sensing data production is to be made by several devices, which are either new or existing devices, compatible with the architecture. The types of devices involved, in addition to the BS or RSU, are typically:
- Various types of dedicated sensors (e.g., radar, LiDAR, cameras) deployed throughout urban environments to gather data on movement, temperature, air quality, etc.
- Mobile Devices: User Equipment and loT devices contributing to the sensing ecosystem by collecting localized data and relaying it back to the network, these devices can act as both producers and consumers of sensing data.
- Autonomous Systems: UAVs and autonomous vehicles equipped with sensing capabilities providing real-time environmental data for applications such as traffic management and disaster response.

With such infrastructures and data production means, privacy preservation becomes an increasingly important challenge, notably in Europe, where these privacy preservation subjects are considered of utmost importance, specifically against intrusive data collectors. It is then desirable that any implementation of sensing as a service must comply with legal privacy requirements, ensuring that data collection and processing are transparent, secure, and respect the privacy rights of individuals. Thus, respecting individuals' privacy is important and it is needed that sensing should only occur with explicit authorization from the user. This respect for privacy is essential to maintain trust and ensure that individuals feel secure in their environments. This means that individuals should have the choice to opt-in or opt-out of being sensed. At the same time, one should recognize the potential benefits that sensing can provide. For example, sensing technologies can enhance security by monitoring for threats and can improve healthcare by tracking health metrics and providing timely interventions.

The versatility of sensing architecture (notably 5G-a or 6G) sensing capabilities means they can adapt to different contexts and provide valuable services while respecting user privacy.

The disclosure comes with a context aware sensing capability for ensuring a privacy preservation along with selective services associated to user and community needs.

### 3. Summary of the invention

The disclosure comes with a solution for at least some of the drawbacks of prior techniques. More specifically, the disclosure relates to a method, implemented by at least one privacy preservation device connected to a communications network with sensing services, the method comprising:
- obtaining, at least one piece of data representing a value of at least one privacy preservation parameter corresponding to at least one applicative service and associated to a user.
- obtaining, from at least one service provider operating with the communications network for implementing said at least one applicative service, at least one piece of data representing a value of at least one applicative service parameter of the at least one service, the at least one applicative service being at least partly executed in the communications network,
- with said at least one piece of data representing the value of the at least one privacy preservation parameter and said at least one piece of data representing the value of at the least one applicative service parameter, determining at least one sensing accuracy parameter value for at least one corresponding sensing device of the communications network and/or for at least one applicative service.

According to a specific embodiment, the method further comprises filtering collection of data and/or processing of collected data into information as a function of the at least one sensing accuracy parameter value.

According to a specific embodiment, the at least one sensing accuracy parameter value for the at least one corresponding sensing device is used for defining a virtual privacy cocoon to be set around a location of the user.

Hence, it enables creating a dynamic and adaptive privacy boundary, referred to as a virtual privacy cocoon, around the user's equipment. By setting a sensing accuracy parameter value for the corresponding sensing device, the method enables the establishment of a customizable privacy zone that can adjust in real-time to the user's location and privacy preferences.

According to a specific embodiment, the at least one sensing accuracy parameter value is used by said at least one service provider as a function of a priority level of at least one service type to render by said at least one service provider.

Hence, this enables overwrites user requirements for privacy in function of the objectives of the services to render to the user thru the user equipment. For instance, in a factory operating automated robots or assembly lines, user requirements for privacy do not have the possibility of overriding security requirement attached to the user -or user equipment- thus preventing harming situations or injuries.

According to a specific embodiment, the method further comprises transmitting the sensing accuracy parameter value to the at least one sensing device and receiving, from the at least one sensing device, a response regarding the acceptance to set the sensing accuracy parameter value for the user.

Thus, this facilitates real-time feedback and adaptability in the sensing system. By transmitting the sensing accuracy parameter value to the sensing device and receiving a response regarding its acceptance, the method ensures that the sensing devices are operating within their capabilities and in accordance with user-defined privacy settings. This two-way communication allows for immediate adjustments to be made if a sensing device cannot meet the specified accuracy requirements, thereby preventing potential privacy breaches or data inaccuracies. It enhances the reliability and responsiveness of the sensing system, as devices can promptly communicate their operational status and limitations.

According to a specific embodiment, the method further comprises the at least one sensing device determining its capability to set its sensing accuracy according to the sensing accuracy parameter value, and wherein:
- in case the at least one sensing device determines incompatibility of the sensing accuracy parameter value with its sensing capabilities, a negative response is transmitted,
- in case the at least one sensing device determines compatibility of the sensing accuracy parameter value with its sensing capabilities, a positive response is transmitted.

According to a specific embodiment, the method further comprises transmitting the sensing accuracy parameter value to the at least one service provider and receiving from the at least one sensing device an acknowledgment that the sensing accuracy is settable according to the sensing accuracy parameter value for the user.

According to a specific embodiment, the method further comprises the at least one service provider determining its capability to set its sensing accuracy according to the sensing accuracy parameter value, and wherein:
- in case the at least one piece of data representing the value of the at least one applicative service parameter is incompatible with sensing accuracy parameter value, a negative acknowledgment is transmitted,
- in case the at least one piece of data representing the value of the at least one applicative service parameter is compatible with sensing accuracy parameter value, a positive acknowledgment is transmitted.

According to a specific embodiment, the at least one piece of data representing the value of the at least one privacy preservation parameter comprises a user equipment identification value, at least one radius defining a distance around the user equipment and at least one identification of at least one service type to which the user equipment identification value and the least one radius have to be applied.

This enables control over the extent of data collection and processing, ensuring that only relevant data within the defined radius is captured and utilized by authorized services. It enhances user privacy by allowing users to define the spatial boundaries within which their data can be accessed, thereby minimizing the risk of unauthorized data exposure. Additionally, the method supports a flexible and scalable privacy framework that can adapt to various service types and user scenarios, providing a robust solution for managing privacy in diverse environments.

According to a specific embodiment, the method further comprises obtaining a location of the user equipment and wherein determining the at least one sensing accuracy parameter value for at least one corresponding sensing device of the communications network is function of the location of the user equipment.

According to a specific embodiment, the method further comprises obtaining piece of data representing updates in privacy policy to apply to a given location and triggering updates the at least one sensing accuracy parameter value as a function of the privacy policy.

In another aspect the disclosure also relates to a privacy preservation device, the device comprising at least one processing unit and one memory, the device further comprising components designed for:
- obtaining, at least one piece of data representing a value of at least one privacy preservation parameter corresponding to at least one applicative service and associated to a user.
- obtaining, from at least one service provider operating with the communications network for implementing said at least one applicative service, at least one piece of data representing a value of at least one applicative service parameter of the at least one service, the at least one applicative service being at least partly executed in the communications network,
- with said at least one piece of data representing the value of at the least one privacy preservation parameter and said at least one piece of data representing the value of at the least one applicative service parameter, determining at least one sensing accuracy parameter value for at least one corresponding sensing device of the communications network and/or for at least one applicative service.

In another aspect, the disclosure also relates to a communications network with sensing services comprising at least one sensor connected to the communications network infrastructure and least one privacy preservation device.

The present disclosure aims also at a computer program comprising instructions causing the implementation of the method defined above when such instructions are run by a processor.

### 4. Brief description of the drawings

More details are presented in the specification below, with reference to the appended drawings where:
- Figure 1, illustrate the steps of the privacy preservation method according to the disclosure,
- Figure 2, Illustrate the architecture of a communications network with sensing service according to the disclosure.
- Figure 3 shows an example of embodiment of a device to perform the method presented above.

### 5. Description of embodiment

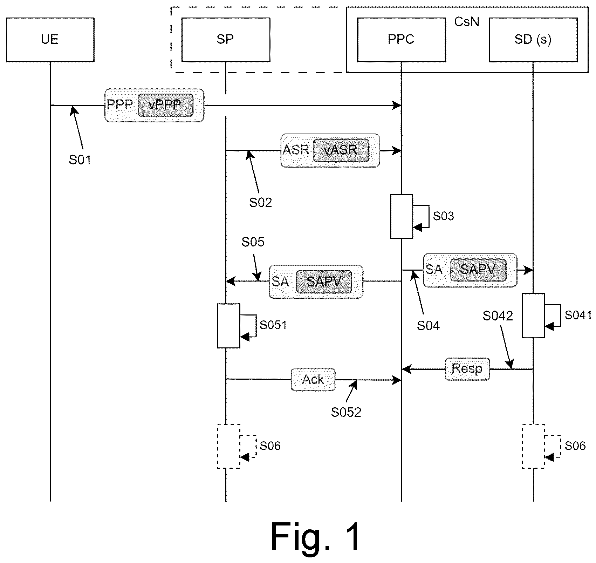

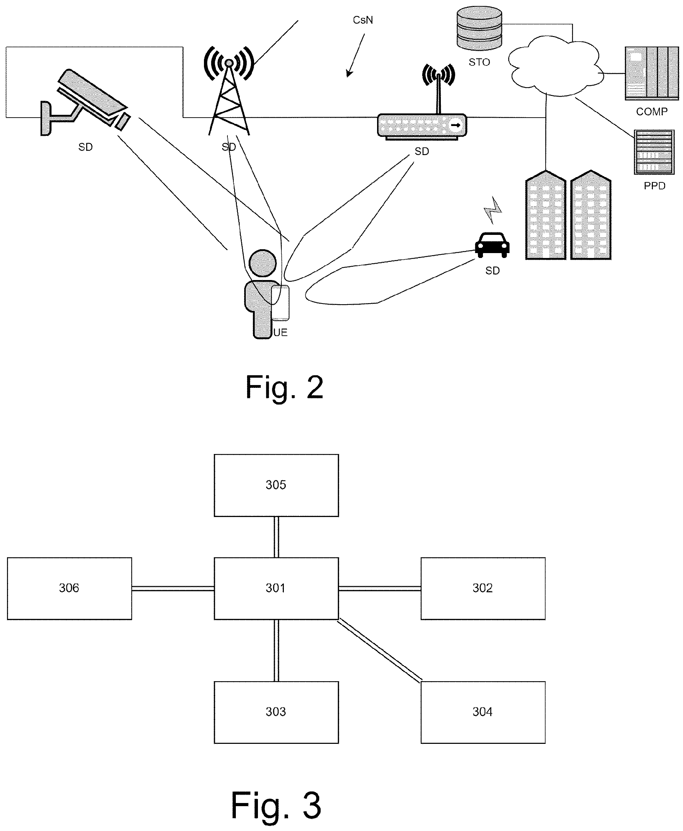

In the description below, in relation with figure 1 and 2, a configuration is exemplified, where a communications network implementing or providing sensing data or services is implemented at least in a limited location (area). It is supposed that, in this location one or several users are equipped with a user equipment (i.e. smartphone, smart watch, etc.) compatible with the communications network architecture.

According to the disclosure, with this communications network architecture (CsN), a method is provided (fig.1 below, sensing restriction method in a given location), in which "sensing-as-a-service" is implemented while allowing user to preserve privacy. According to the disclosure, an area (or location) is the region of space considered. For example:
- a public space, such as a street, a station hall;
- a restricted-access space, such as a professional building, factory, offices or living premises (house, apartment).

In both of these areas, it is important to manage the privacy of the sensing information according to the service the users registered to and/or to allow freedom-of-movement for people (while sleeping in a bed for example), animals (pets freely moving in a house), or robots (manipulating objects at high speed in a predefined spatial envelope) without firing false alarms while monitoring intrusion/approach of other objects/users. According to the disclosure, one aspect of privacy preservation in this communications network architecture is (geo)locating, the position of a user or a position of sensing data in the area. Geolocation usually takes an earth coordinate system, but it can extend to a local coordinate system defined in the area.

Sensors (sensing devices SD) are devices that can make measurement of a physical system. In the context of the disclosure, the sensors (preferably) sense the objects and people positions in the area, either directly or indirectly. Several technologies can be considered such as radio-wave sensing technologies, LiDAR, Camera, microphones, etc. The sensors are for example connected sensors integrated by a communication system or included in existing communication devices defining a 6G communication infrastructure such as base stations, or in users' terminals. These devices allow obtaining sensing data, i.e. set of pieces of data collected iteratively by sensors, which are collected and stored at least temporally, in storage infrastructure STO. According to the disclosure, sensing data is tagged with a geolocation or location tag. Example of data "sensed" by the network is presence/absence of object at said geolocation positions (point cloud, 3D representation of objects), temperature, colour, speed, acceleration. In some situations, a sensing device SD may by formed by the aggregation of several devices, which when grouped, are considered as a single sensing device (e.g. a connected camera and a router).

The sensing data is collected (obtained) by sensing services, which are executed on computing architecture COMP, by a service provider. Sensing services perform the fusion, extrapolation, update and provision of various sensing data to the sensing services for customers. A sensing service typically processes the sensing data into sensing information to be provided to the target services (for example social security services, police and emergency services, bank services, etc.). For example, sensing information is related to a Dynamic 3D Map that can be provided in real time to services for monitoring the activity of robots in a factory or vehicle traffic in a city.

According to the disclosure, services can target users, e.g. humans, but can also be applied to a group of humans, animals or robots. In the context of the disclosure, at least one user authorizes or not (in the limit of the law) the processing of its sensing data or related obtained sensing information. Technically, this is done by the user, or a manager (in case the "user" is an animal or a machine) provisioning a dedicated data-structure with use cases and/or scenarios determining the possibility for one or several (type of) services to process sensing data or sensing information related to the user: provisioning typically comprise providing pieces of data representing values of privacy preservation parameters corresponding to applicative services (or applicative service types) and associated to the user. To determine authorized or unauthorized services, users are preferably identified by their equipment (e.g. smartphone, watch, other identification equipment), which in some cases also allows users access some sensing-based services. In other complementary situation, the sensing architecture (the communications network with sensors connected therein) directly implements means for identifying users. Sensing information (e.g. name, id, any fingerprint, phone number of the user) (obtained from pictures (sensing data) from camera (sensing device) with face recognition for example) can be used for initial identification of user. The target (authorized or unauthorized) services exploits the *"identification"* sensing information. This allows to monitor and exploit the knowledge of the presence of human, animal or robots in an area, their posture, measure their heartbeat (for human and animals), recognize the shape of an object, the trajectory of a moving element. The target (authorized or unauthorized) services use such information to offer a service to their customers such as: health condition monitoring, intrusion detection in limited access space, identify risk of injuries in factories, identify aggressive/abnormal behaviour, etc. In a case where the customer is a city, traffic or crowd monitoring is another example of usage of the sensing information. Other cases are applicable for customers being companies or factories.

Considering this context the disclosure relates to a method, implemented by at least one privacy preservation device PPD connected to a communications network with sensing services, at least one sensor being connected to the communications network. According to the disclosure, the method comprises the following steps:
- obtaining S01, at least one piece of data representing a value vPPP of at least one privacy preservation parameter PPP corresponding to at least one applicative service (or service type) and associated to a user,
- obtaining S02, from at least one service provider SP operating with communications network for implementing said at least one applicative service, at least one piece of data representing a value vASR of the at least one service, the at least one applicative service being at least partly executed in the communications network,
- with said at least one piece of data representing a value vPPP of at least one privacy preservation parameter PPP and said at least one piece of data representing a value vASR of at least one applicative service parameter ASR, determining S03 at least one sensing accuracy SA parameter value SAPV for at least one corresponding sensing device SD of the communications network.

In addition, the method further comprises filtering S06 collection of data and/or processing of collected data into information as a function of the at least one sensing accuracy SA parameter value SAPV, by some devices of the communications network infrastructure.

Hence the method allows dynamically tailoring the sensing accuracy of devices within communications network architecture with sensing services based on user-specific privacy preferences and service requirements. By obtaining privacy preservation parameters from user equipment and applicative service parameters from service providers, the method enables a precise calibration of sensing accuracy. This ensures that the sensing devices operate at an optimal level that respects user privacy while fulfilling the functional needs of the service. This dynamic adjustment capability enhances the overall efficiency and effectiveness of the communications network architecture. It allows for a more personalized and context-aware sensing environment, reducing unnecessary data collection and processing. Consequently, this leads to improved resource management, as the system can allocate sensing capabilities where they are most needed without compromising user privacy. Additionally, it fosters user trust and compliance with privacy regulations, as users have greater control over how their data is sensed and utilized. This technical advantage not only benefits users but also service providers, who can offer more targeted and privacy-compliant services.

According to the disclosure, sensing accuracy is defined as a parameter for filtering the collection of user-related data and/or user related information. This filtering may include not collecting, adjusting the preciseness of the data collected, or changing the preciseness of the information obtained (gathered) from that data. In addition, detection accuracy is location-based and may be intentionally defined based on messages exchanged between devices and sensors in the communications network. More specifically sensing accuracy is to be understood as a parameter for the filtering of the collection of data related to a given user. This filtering (step or method, depending on the situation) can consist in:
- an absence of the collection of data related to the user (avoidance of data),
- an adaptation of the preciseness of the collected data (for example adaptation of the resolution of the collected data, e.g. downgrading the preciseness of collected data through a LiDar or a camera for example, changing the voice coding information of voices),
- filtering the collection of data related to the user (i.e. providing some data, but not all data),
- an absence of the collection of information related to the user (avoidance of information),
- an adaptation of the preciseness of the collected information (for example adaptation of the process performed on the collected data in order to obtain the information (e.g. downgrading the preciseness of information e.g. by blurring all or part of an image, by removing or blurring details in a 3D map or digital twin reconstructed from a map of points obtained from a LiDar),
- filtering the collection of information related to the user (i.e. providing some information, but not all information).

In addition, sensing accuracy may be location-based and may be defined on purpose, as a function of exchanged messages between equipment and sensors of the communications network. These sensing accuracy (SA) parameters values for the sensing device (SD) and/or for the user are used for defining a (virtual) privacy cocoon to be set around the location of the user, whenever the user is indoor or outdoor.

A virtual cocoon is set by a (geo)located zone in the area associated with a user and a service. The virtual cocoon results of the implementation of the at least one piece of data representing the value of the at least one privacy preservation parameter corresponding to the at least one applicative service (or service type) and associated to the user. It is intended to be used such that the user can define the level, nature, and confidentiality of the sensing data and/or information that can be provided to the services providers (for implementing their services). For example, the geographical zone associated with the virtual cocoon can be a sphere centered on the user. In this case, the virtual cocoon follows the user when the user is moving. The user allows sharing of its geolocation in order to be identified as a trusted component by a monitoring service, but the monitoring service cannot obtain sensing data related to (interior) of the virtual cocoon geographical zone. Trust is defined by the global system that operates the method and system of disclosure. This trust might be a set of several rules, or constraints, e.g., a user is trusted if he is registered in the database of the system with at least his (geo)location and an ID.

In another example, a private system can use sensing information for identifying a user (human, robot or pet) and tracking its position. The virtual cocoon can be used to trust the user and avoid false alarm in sensing-based services.

In another example, it can define a fixed subset of the area, such as a cube, within which the associated user can freely move. The exact position or posture of the user is not monitored by sensing-based services. In this context, the subset of the area itself is consequently trusted.

The shape of the virtual cocoon can be specific to each service. For example, a concentric nested set of virtual cocoons can be defined, each virtual cocoon being associated to a different level of privacy. For example, for position monitoring, the virtual cocoon shape can be a sphere of 3m radius; while for presence assessment in a building, the virtual cocoon shape can be a sphere of 1 meter radius.

The virtual cocoon is associated to the privacy/freedom-of-movement preservation method (or step) as disclosed previously, which can implement, at least one sensing accuracy SA parameter value SAPV:
- a filtering of the sensing information related to the virtual cocoon according to each service authorization; since each sensing information is associated with a (geo)location, filtering out any sensing data belonging to the zone (location) associated with the virtual cocoon is implementable by:
   ∘ filtering can be done at the sensing service which can adapt different filtering rules for different users and different sensing-based services (meaning the data provided by sensors is not filtered, but the gathered information, at the service level, is filtered).
   ∘ The filtering can be done at the sensor side, by filtering the data of the virtual cocoon zone in the feedback to the sensing service.
- and/or by informing the sensors of the area to avoid sensing, and/or adjust the sensing preciseness, in the zone associated the virtual cocoon,
   ∘ For example, in case of LiDARs, the cone encompassing the virtual cocoon can be excluded from the scanned zone,
- and/or by activating a device that actively perturbates the sensing operation in the geographical zone associated to the virtual cocoon. This can be understood as a jammer of the sensing system. By sending radio-waves or light in the direction of the light or radio-wave based sensors receivers, the sensing is disabled. Such jamming activity should be detected and reported by the sensing service, except if it is associated with a trusted user position.

According to the disclosure, a virtual cocoon can be defined for each user and for each service. It can be user specific, the parameters of the geographical zone corresponding to the virtual cocoon can be tuned by the user itself. In one option, the size of the virtual cocoon impacts the quality of service (larger virtual cocoons imply less sensing accuracy for example: a spherical cocoon of 10 meters radius is too large for healthcare monitoring in a crowded environment, a spherical cocoon of 1 mm is too small for face recognition). The virtual cocoon can be defined by the sensing service, that is able for example to learn a typical zone for freedom-of-movement of the user in the zone. This is particularly relevant for a robot in a factory, for example a robot arm operating at high speed within a geographical envelope that can be learnt or obtained from specifications. The virtual cocoon can be defined by the target service that defines, for each user, for example, the smallest virtual cocoon providing a given quality for the service. For example, the size of a virtual cocoon for a pet moving in a house can be defined according to the capability of the service to track the position of the pet and according to the maximum moving speed of the pet. The size of virtual cocoon is adjusted such that, whatever the pet movement, it does not get out the virtual cocoon and does not trigger a false alarm in an intrusion detection service.

The signaling process in the described method is part of an effective implementation of privacy and freedom-of-movement preservation within the communications network architecture. This process involves the transmission of information related to virtual cocoons, which define zones around user or user equipment that dictate the level of privacy and data access. The signaling ensures that the necessary parameters are communicated to the nodes responsible for executing filtering, avoidance, or jamming mechanisms, as depicted previously. These mechanisms are used for maintaining the integrity of the virtual cocoon by controlling the data flow and ensuring that only authorized data and/or information is processed.

In step S04, the method comprising transmitting the sensing accuracy parameter value (SAPV) to the sensing device. This transmission is a part of the signaling process and informs the sensing device of the required accuracy level based on the user's privacy preferences and the service's needs. The sensing device then evaluates its capability to meet this requirement in step S041. This evaluation determines whether the device can operate within the specified parameters, ensuring that the privacy cocoon's boundaries are respected. Following the evaluation, step S042 involves the sensing device sending a response back to the system. This response indicates whether the device can accept and implement the specified sensing accuracy parameter value. A positive response confirms that the device can function within the defined privacy parameters, while a negative response triggers adjustments to ensure compliance. This feedback loop allows maintaining real-time adaptability and responsiveness in the sensing system, allowing for immediate corrections if necessary: in the event a sensing device is not able to meet the requirement relative to the specified sensing accuracy parameter value, a *"post data capture"* adjustment can be processed on the captured data. This can be done by the service provider and/or by a gateway or a proxy of the communications network, considering such devices comprise means for filtering data according to the specified sensing accuracy parameter value.

Step S05 extends the signaling process by transmitting the sensing accuracy parameter value to the service provider (i.e. one device belonging to the service provider and implementing the applicative service). This step ensures that the service provider implements the privacy settings and adjusts its operations accordingly. The service provider then assesses its capability to align with these settings in step S051. This assessment ensures that the services provided are in accordance with the user's privacy preferences and the operational capabilities of the sensing devices. In step S052, the service provider sends an acknowledgment back to the system, confirming whether it can adhere to the specified sensing accuracy parameters. This acknowledgment is part of the signaling process, as it ensures that all components of the communications network architecture are synchronized in their operations. A positive acknowledgment indicates that the service provider can comply with the privacy settings, while a negative acknowledgment necessitates further adjustments to align with the user's requirements.

The authorization of privacy settings is a user-centric aspect of the signaling process. Users can define and adjust their privacy preferences through an integrated application, similar to how permissions are managed for microphones or cameras in other systems. This user interface allows individuals to specify the types of data that can be collected and the level of accuracy required, such as, for instance, authorizing point cloud scanning within the virtual cocoon with a maximum accuracy of 10 cm, for a given service or service type. Additionally, the sensing service or target service can present the user with options regarding the types of information that can be extracted from the sensing data, such as heartbeat, posture, or precise position. This interactive approach empowers users to have control over their data and information, ensuring that their privacy preferences are respected and integrated into the overall signaling process.

According to the disclosure, a relation between virtual cocoons, such as when the intersection of the geographical space of two virtual cocoons is not empty (collision), can trigger an action according to the target service:
- In an urban environment with person security monitoring, the privacy option of the cocoon can be active if the user is far from other persons. The analysis of persons' behavior and posture may be activated only when their mutual distance is lower than a given threshold, for example when the virtual cocoons defined for this purpose would collide,
- In a factory context, the virtual cocoon of a worker can be tuned to a safety zone that ensures no hazardous operation of robots in a given time/space area. The workers and (more specifically) the robots can freely move as soon as no collision of their virtual cocoon occurs. If such a collision occurs, the considered robot activity is stopped, slowed down or a worker-proximity operational mode should be used.

Several situations may occur in an update of privacy parameters, which imply an update of the virtual cocoon and/or the filtering step or method.

In scenarios where a user enters a specific geographical zone that necessitates a different privacy policy, the virtual cocoon's filtering functions are dynamically adjusted to accommodate the new requirements. As the user transitions into this predefined area, the privacy preservation device PPD detects the change in location and triggers a reconfiguration of the virtual cocoon's parameters, in accordance with privacy policy. This involves updating the sensing accuracy and data collection protocols to align with the privacy policy specific to that zone. For instance, if the zone requires heightened privacy, the privacy preservation device PPD may reduce the granularity of data collected or limit the types of data that can be accessed by external services. The filtering mechanism is recalibrated to ensure that only data permissible under the new privacy policy is captured and processed. This adjustment is managed through the communications network architecture's signalling process, which communicates the updated parameters to the relevant sensing devices and service providers. The system continuously monitors the user's location to maintain the appropriate privacy settings as long as the user remains within the designated zone. Once the user exits the zone, the virtual cocoon reverts to its previous configuration, ensuring seamless transitions between different privacy policies.

In another example, when it is determined that two virtual cocoons intersect, the system recognizes this collision as a trigger for modifying the filtering functions of the involved cocoons. The intersection of cocoons indicates a potential overlap in privacy zones, which necessitates a revaluation of the data sharing and sensing protocols. Upon detecting the collision, the system initiates a negotiation process between the two cocoons to determine the appropriate level of data sharing and privacy preservation. This may involve temporarily adjusting the sensing accuracy or restricting certain types of data from being collected or shared between the cocoons. The filtering mechanism is adapted to ensure that the privacy preferences of both users are respected while allowing for necessary interactions. The privacy preservation device PPD employs a set of predefined rules to manage these interactions, which may include prioritizing certain privacy settings or implementing additional security measures to prevent unauthorized data access. Prioritizing certain privacy settings may comprise, for example, using the highest allowed values of privacy parameters. The signalling process (of the communications network) facilitates communication between the cocoons and the associated sensing devices, ensuring that the updated filtering parameters are applied in real-time. Once the collision is resolved, the system restores the original filtering settings for each virtual cocoon, maintaining the integrity of the users' privacy zones.

In another situation, the collision or interaction of two virtual cocoons triggers a service designed to enhance safety protocols in environments where human and machine interactions occur. For instance, in a factory setting, when the virtual cocoon of a worker intersects with that of a robotic arm, the system activates a safety monitoring service. This service temporarily increases the level of surveillance and data collection to ensure that the interaction between the worker and the machine remains safe. The system can collect detailed data on the speed, trajectory, and operational status of the robotic arm, as well as the position and movements of the worker (these data not being collected in non-interaction of the cocoons, for example). This enhanced monitoring allows for real-time analysis of the interaction, enabling the system to detect any potential safety hazards or deviations from standard operating procedures. If any risks are identified, the system automatically adjust the robot's operations, such as slowing down its movements or pausing its activity, to prevent accidents. Once the interaction is complete and the cocoons no longer overlap, the system reverts to its standard monitoring protocols, ensuring that the enhanced data collection is only active during critical interactions. This approach not only safeguards the individuals involved but also optimizes the use of resources by focusing enhanced monitoring efforts only when necessary.

In cases where a user defines an extended privacy duration, the virtual cocoon's filtering functions are adjusted to maintain the enhanced privacy settings for the specified period. This involves configuring the cocoon to operate under a heightened privacy mode, which may include increasing the level of data obfuscation, reducing the frequency of data collection, or limiting the types of data accessible to external services, as previously explained. The system records the user's request for an extended privacy duration and implements the necessary changes to the cocoon's parameters. During this period, the filtering mechanism ensures that the user's data and information is protected according to the enhanced privacy settings, preventing unauthorized access or data breaches. The privacy preservation device PPD through the communications network architecture's signalling process communicates these changes to the relevant sensing devices and service providers, ensuring that all components of the system adhere to the updated privacy protocols. Once the specified duration elapses, the privacy preservation device PPD automatically reverts the virtual cocoon to its default settings, restoring the original filtering functions. This automated transition ensures that the user's privacy preferences are consistently maintained without requiring manual intervention.

Figure 3 discloses a privacy preservation device PPD according to the disclosure. The privacy preservation device PPD takes the form of an electronic device equipped with at least one processing unit and a memory module. The processing unit, referenced as element 301, is responsible for executing the software instructions that implement the method. It is capable of performing complex computations and managing data flow between various components of the apparatus. The memory module, referenced as element 302, stores the software instructions, and, at least transitory, the data representing the values of the privacy preservation parameters associated to users, the piece of data representing the values the applicative service parameters of the services or types of service and the sensing accuracy parameter values for the sensing devices of the communications network and/or for the applicative services (or providers), as well as any intermediate data generated during the execution of the method.

The apparatus further includes a data input interface, referenced as element 303, connected to the communications network and/or a local storage device, allowing the apparatus to access the necessary elements for execution of the method. Additionally, a data output interface, referenced as element 304, is provided for communicating the results of the execution to the sensing device. It can also be the network interface. To support the execution of the method, the apparatus is equipped with a software module, referenced as element 305, which contains the algorithms and logic required by the method. This software module is designed to interact seamlessly with the processing unit and memory module, ensuring efficient execution of the method. In some cases, the apparatus may also include a user interface, referenced as element 306, which allows users to configure the method parameters, view the parameters, and monitor the execution of the method. This interface can be implemented as a graphical user interface (GUI) or a command-line interface (CLI), depending on the specific requirements of the application.

## Claims

1. A method, implemented by at least one privacy preservation device (PPD) connected to a communications network with sensing services, the method comprising:
- obtaining (S01), at least one piece of data representing a value (vPPP) of at least one privacy preservation parameter (PPP) corresponding to at least one applicative service and associated to a user.
- obtaining (S02), from at least one service provider (SP) operating with the communications network for implementing said at least one applicative service, at least one piece of data representing a value (vASR) of at least one applicative service parameter (ASR) of the at least one service, the at least one applicative service being at least partly executed in the communications network,
- with said at least one piece of data representing the value (vPPP) of the at least one privacy preservation parameter (PPP) and said at least one piece of data representing the value (vASR) of at the least one applicative service parameter (ASR), determining (S03) at least one sensing accuracy (SA) parameter value (SAPV) for at least one corresponding sensing device (SD) of the communications network and/or for at least one applicative service.

2. The method according to claim 1, wherein it further comprises filtering (S06) collection of data and/or processing of collected data into information as a function of the at least one sensing accuracy (SA) parameter value (SAPV).

3. The method according to claim 1 or 2, wherein the at least one sensing accuracy (SA) parameter value for the at least one corresponding sensing device (SD) is used for defining a virtual privacy cocoon to be set around a location of the user.

4. The method according to claim 1 to 3, wherein the at least one sensing accuracy (SA) parameter value is used by said at least one service provider (SP) as a function of a priority level of at least one service type to render by said at least one service provider (SP).

5. The method according to claim 1 to 4, wherein the method further comprises transmitting (S04) the sensing accuracy parameter value (SAPV) to the at least one sensing device (SD) and receiving (S042), from the at least one sensing device (SD), a response (Resp) regarding the acceptance to set the sensing accuracy parameter value (SAPV) for the user.

6. The method according to claim 5, wherein the method further comprises the at least one sensing device (SD) determining (S041) its capability to set its sensing accuracy (SA) according to the sensing accuracy parameter value (SAPV), and wherein:
- in case the at least one sensing device (SD) determines incompatibility of the sensing accuracy parameter value (SAPV) with its sensing capabilities, a negative response is transmitted (S042),
- in case the at least one sensing device (SD) determines compatibility of the sensing accuracy parameter value (SAPV) with its sensing capabilities, a positive response is transmitted (S042).

7. The method according to claim 1 to 6, wherein the method further comprises transmitting (S05) the sensing accuracy parameter value (SAPV) to the at least one service provider (SP) and receiving (S052) from the at least one sensing device (SP) an acknowledgment (Ack) that the sensing accuracy (SA) is settable according to the sensing accuracy (SA) parameter value for the user.

8. The method according to claim 7, wherein the method further comprises the at least one service provider (SP) determining (S051) its capability to set its sensing accuracy (SA) according to the sensing accuracy parameter value (SAPV), and wherein:
- in case the at least one piece of data representing the value (vASR) of the at least one applicative service parameter (ASR) is incompatible with sensing accuracy parameter value (SAPV), a negative acknowledgment is transmitted (S052),
- in case the at least one piece of data representing the value (vASR) of the at least one applicative service parameter (ASR) is compatible with sensing accuracy parameter value (SAPV), a positive acknowledgment is transmitted (S052).

9. The method according to claim 1 to 8, wherein the at least one piece of data representing the value (vPPP) of the at least one privacy preservation parameter (PPP) comprises a user equipment identification value (ueiv), at least one radius (ueivr) defining a distance around the user equipment (UE) and at least one identification of at least one service type to which the user equipment identification value (ueiv) and the least one radius (ueivr) have to be applied.

10. The method according to any of preceding claim, wherein the method further comprises obtaining a location of the user equipment (UE) and wherein determining (S03) the at least one sensing accuracy (SA) parameter value (SAPV) for at least one corresponding sensing device (SD) of the communications network is function of the location of the user equipment (UE).

11. The method according to any of preceding claim, wherein the method further comprises obtaining piece of data representing updates in privacy policy to apply to a given location and triggering updates the at least one sensing accuracy (SA) parameter value (SAPV) as a function of the privacy policy.

12. A privacy preservation device (PPD), the device comprising at least one processing unit and one memory, the device further comprising components designed for:
- obtaining, at least one piece of data representing a value of at least one privacy preservation parameter corresponding to at least one applicative service and associated to a user.
- obtaining, from at least one service provider operating with the communications network for implementing said at least one applicative service, at least one piece of data representing a value of at least one applicative service parameter of the at least one service, the at least one applicative service being at least partly executed in the communications network,
- with said at least one piece of data representing the value of at the least one privacy preservation parameter and said at least one piece of data representing the value of at the least one applicative service parameter, determining at least one sensing accuracy parameter value for at least one corresponding sensing device of the communications network and/or for at least one applicative service.

13. A communications network with sensing services comprising at least one sensor connected to the communications network infrastructure and least one privacy preservation device (PPD) according to claim 11.

14. A computer program comprising instructions causing the implementation of the method according to anyone of the preceding claims when such instructions are run by a processor.
